# EUROPÄISCHE PATENTSCHRIFT

(11) **EP 2 297 563 B1**
(45) Veröffentlichungstag und Bekanntmachung des Hinweises auf die Patenterteilung: **26.09.2018**
(21) Anmeldenummer: 09768943.4
(22) Anmeldetag: 18.06.2009
(51) Int. Cl.: G01M 1/36

(54) **WUCHTEINRICHTUNG, AUSWUCHTSYSTEM UND AUSWUCHTVERFAHREN**
BALANCING DEVICE, BALANCING SYSTEM, AND BALANCING METHOD
DISPOSITIF D'ÉQUILIBRAGE, SYSTÈME D'ÉQUILIBRAGE ET PROCÉDÉ D'ÉQUILIBRAGE

(30) Priorität: 18.06.2008 DE 102008028892
(43) Veröffentlichungstag der Anmeldung: 23.03.2011
(73) Patentinhaber: Dittel Messtechnik GmbH, 86899 Landsberg am Lech (DE)
(72) Erfinder: KOENIGER, Willibald, 87600 Kaufbeuren (DE); SCHALK, David, 44789 Bochum (DE)
(74) Vertreter: Manitz Finsterwald Patentanwälte PartmbB
(86) Internationale Anmeldenummer: PCT/EP2009/004398
(87) Internationale Veröffentlichungsnummer: WO 2009/156094

(56) Entgegenhaltungen:
- EP-A- 0 578 939
- EP-A- 1 580 543
- WO-A-01/98745
- WO-A-94/03788
- WO-A-94/04899
- WO-A-03/042650
- DE-A1- 3 742 149
- DE-A1- 10 304 719
- US-A1- 2001 035 068
- US-A1- 2006 005 623

## Beschreibung

Die Erfindung betrifft eine Wuchteinrichtung, insbesondere einen Wuchtkopf oder einen Wuchtring, für ein elektromechanisches Auswuchtsystem für rotierende Einheiten, insbesondere für Spindeln von Werkzeugmaschinen, mit zumindest einer Wuchtmasse, die zur Kompensation einer Unwucht der Einheit verstellbar ist, und einer Antriebseinheit, insbesondere einem Elektromotor, zum Verstellen der Wuchtmasse. Solche Wuchteinrichtungen sind in den Dokumenten EP1580543, WO01/98745 und US2006/0005623 offenbart.

Bei derartigen Wuchteinrichtungen besteht das Problem, dass ein zielgerichtetes automatisches Auswuchten nicht möglich ist. Es sind Wuchtköpfe bekannt, die verstellbare Gewichte aufweisen. Bei diesen bekannten Systemen kann aber nur nach dem so genannten "Trial and Error"-Prinzip gearbeitet werden, d.h. die Gewichte werden verstellt, und es wird das Verhalten des Gesamtsystems während dieses Verstellvorgangs hinsichtlich des Betrags und der Phase bzw. Winkelstellung des die jeweilige Unwucht kompensierenden, sich durch die Gewichte ergebenden Wuchtvektors beobachtet. Nachteilig an diesen Systemen ist insbesondere auch die lange Zeitdauer, die für den Auswuchtvorgang benötigt wird.

Ebenfalls bekannt sind "händische" Auswuchtverfahren, bei denen die Gewichte per Hand an geeignete Positionen gesetzt werden. Ein erfahrener Bediener kann auf diese Weise in Abhängigkeit von der jeweils gemessenen Reaktion des Gesamtsystems auf die momentan gewählte Lage der Gewichte eine zufrieden stellende Auswuchtung vornehmen. Für viele Anwendungen ist ein derartiges manuelles Verfahren allerdings vor allem aufgrund des damit verbundenen Zeitaufwands nicht akzeptabel.

Aufgabe der Erfindung ist es, eine Möglichkeit zum Auswuchten von rotierenden Einheiten zu schaffen, die eine hohe Zuverlässigkeit garantiert, möglichst wenig Zeit benötigt und automatisch durchführbar ist.

Die Lösung dieser Aufgabe erfolgt durch die Merkmale der Ansprüche 1 und 9.

Durch die Vorgabe einer Mehrzahl von Positionen für die Wuchtmasse ist es möglich, die Wuchtmasse gezielt in eine für den jeweiligen Auswuchtvorgang benötigte Position zu verstellen. Es ist nicht erforderlich, zumindest einen wesentlichen Teil des insgesamt möglichen Verstellweges für die Wuchtmasse deshalb zu durchfahren, um durch Beobachten der Reaktion des rotierenden Gesamtsystems die jeweils optimale Auswuchtposition der Wuchtmasse erst zu ermitteln. Ein solches "Probieren" ist aufgrund der Erfindung nicht mehr nötig. Folglich ermöglicht es die Erfindung, aus der gemessenen Unwucht eine Sollposition für die Wuchtmasse zu berechnen und anschließend die Wuchtmasse direkt in diese Sollposition zu verfahren. Die Sollposition zeichnet sich dadurch aus, dass die in der Sollposition befindliche Wuchtmasse die gemessene Unwucht gerade kompensiert.

Der Vorteil der erfindungsgemäßen Wuchteinrichtung besteht insbesondere darin, dass sie aufgrund der gezielten Positionierbarkeit der Wuchtmasse ein schnelles und zielgerichtetes automatisches Auswuchten ermöglicht.

Die Lösung der Aufgabe erfolgt außerdem durch ein elektromechanisches Auswuchtsystem für rotierende Einheiten, insbesondere für Spindeln von Werkzeugmaschinen, mit wenigstens einer in eine rotierende Einheit integrierte, an eine rotierende Einheit angebaute und/oder um eine rotierende Einheit herum montierte Wuchteinrichtung der hier angegebenen Art, und mit einer Messeinrichtung zum Bestimmen einer Unwucht der rotierenden Einheit.

Des Weiteren wird die Aufgabe gelöst durch ein Verfahren nach Anspruch 14 zum, insbesondere automatischen, Auswuchten von rotierenden Einheiten mittels wenigstens einer Wuchteinrichtung der hier angegebenen Art, bei dem eine Unwucht der Einheit gemessen wird, aus der gemessenen Unwucht eine Sollposition für die Wuchtmasse berechnet wird, in der die Wuchtmasse die Unwucht kompensiert, und die Wuchtmasse in die Sollposition verstellt wird.

Bevorzugte Weiterbildungen der Wuchteinrichtung, des Auswuchtsystems sowie des Auswuchtverfahrens sind in den abhängigen Ansprüchen, der Beschreibung sowie der Zeichnung angegeben.

Bevorzugt ist die Wuchteinrichtung in die rotierende Einheit integrierbar, an die rotierende Einheit anbaubar und/oder um die rotierende Einheit herum montierbar. Integrierbare und/oder anbaubare Wuchteinrichtungen werden auch als Wuchtköpfe bezeichnet. Generell kann die Erfindung in Verbindung mit beliebig ausgestalteten elektromechanischen Wuchteinrichtungen realisiert werden.

In einer weiteren Ausgestaltung der Erfindung kann vorgesehen sein, dass für die Positionen jeweils die Auswuchtwirkung der in der betreffenden Position befindlichen Wuchtmasse und/oder für jede Änderung der Position der Wuchtmasse die daraus resultierende Änderung der Auswuchtwirkung der Wuchtmasse bekannt oder bestimmbar ist. Die hierdurch gegebene Kenntnis des Verhaltens der Wuchteinrichtung in Bezug auf Verstellbewegungen der Wuchtmasse ermöglicht ein sehr schnelles Reagieren auf gemessene Unwuchten, indem die Wuchtmasse in der jeweils erforderlichen Weise verstellt wird.

Eine weitere Verbesserung der Wuchteinrichtung wird dadurch erreicht, dass gemäß der Erfindung durch die Positionen jeweils die absolute Position der Wuchtmasse in einem bezüglich der Wuchteinrichtung festen Koordinatensystem vorgegeben oder bestimmbar ist. Ein derartiges absolutes System hat Vorteile gegenüber einem lediglich inkremental arbeitenden Positionierungssystem.

Es ist deshalb möglich, die absolut(en) Position(en) der Wuchtmasse(n) zu bestimmen. Ein Vorteil hiervon ist, dass die Positionierungsbestimmung keine eigene Bewegung der Wuchtmasse(n) und/oder einer wie auch immer ausgebildeten Messeinrichtung oder Teilen davon erfordert, d.h. irgendwelche Relativbewegungen von Komponenten werden nicht benötigt.

In der erfindungsgemäßen Wuchteinrichtung nach Anspruch 9 umfasst die Positioniereinrichtung eine Einrichtung zum Messen von Drehstellungen. Hierbei können in vorteilhafter Weise grundsätzlich bekannte Drehstellungsmesseinrichtungen verwendet werden, um für die Positionierbarkeit der Wuchtmasse zu sorgen. In der Einrichtung nach Anspruch 9 wird ein Permanentmagnet relativ zu einem in geeigneter Weise ausgebildeten Sensor drehbar angeordnet, wobei der Sensor in der Lage ist, die Drehstellung des Permanentmagneten mit einer Auflösung von deutlich unter 1° zu messen. Je nach konkreter Ausgestaltung der Wuchteinrichtung ist es möglich, derartige bekannte, insbesondere kostengünstig frei erhältliche Messeinrichtungen zur Positionsbestimmung bzw. Positionierung der Wuchtmasse einzusetzen.

In einem bevorzugten Ausführungsbeispiel der Erfindung sind die Positionen codiert und mittels eines Codelesers lesbar.

Eine Möglichkeit zur Positionscodierung besteht nach einem weiteren Ausführungsbeispiel der Erfindung darin, die Positionen nach dem Gray-code-Prinzip zu codieren. Die Verwendung von Graycodes und die damit verbundenen Vorteile insbesondere bei der Übertragung von Informationen sind grundsätzlich bekannt, weshalb hierauf nicht näher eingegangen zu werden braucht. Besonders vorteilhaft im Hinblick auf die Verwendung zur Positionierung von Wuchtmassen ist die besondere Robustheit bzw. Fehlerunanfälligkeit der Informationsübertragung. Insbesondere kann erfindungsgemäß die Codierung der Positionen nach dem Single-Track-Graycode-Prinzip erfolgen.

Die praktische Umsetzung einer derartigen Codierung kann in grundsätzlich beliebiger Art und Weise erfolgen. Lediglich beispielhaft sei erwähnt, dass als Codeträger ein in Umfangsrichtung magnetisierter Ringstreifen dienen kann, wobei als Codeleser ein entsprechend ausgebildeter Ringstreifen dient, der eine Mehrzahl von in Umfangsrichtung verteilt angeordneten, auf die Art und Weise der Magnetisierung ansprechenden Sensoren aufweist, die beispielsweise in Form von Hall-Sonden vorgesehen sind.

Des Weiteren kann erfindungsgemäß vorgesehen sein, dass einer Verstellbewegung der Wuchtmasse eine Bewegung eines Codeträgers relativ zu einem Codeleser zugeordnet ist, wobei diese Bewegung eine Änderung des lesbaren Positionscodes zur Folge hat. Der Codeträger und die Wuchtmasse können beispielsweise mechanisch zwangsgekoppelt sein, so dass nur eine gemeinsame Bewegung von Wuchtmasse und Codeträger möglich ist.

Eine besonders einfache und gleichzeitig zuverlässige mögliche Ausgestaltung sieht vor, dass der Codeträger wenigstens eine, insbesondere genau eine, ringförmige Codespur umfasst. Im Falle mehrerer Wuchtmassen kann jeder Wuchtmasse eine beispielsweise ringförmige Codespur zugeordnet sein.

Die Wuchteinrichtung kann eine Mehrzahl von Wuchtmassen umfassen, wobei insbesondere genau zwei Wuchtmassen vorgesehen sind. Vorzugsweise sind die Wuchtmassen unabhängig voneinander verstellbar. Wenn wenigstens zwei Wuchtmassen vorgesehen sind, kann erfindungsgemäß der erforderliche Wuchtvektor sehr schnell sowohl hinsichtlich Betrag und Phase bzw. Richtung eingestellt werden. Die einzelnen Wuchtmassen der Wuchteinrichtung können in axialer Richtung zueinander versetzt angeordnet sein. Alternativ ist eine Anordnung der Wuchtmassen mit gleicher axialer Lage möglich, was den Vorteil hat, dass keine axial beabstandeten Ausgleichsebenen existieren und folglich keine Momentenunwucht entsteht.

Bevorzugt ist die erfindungsgemäße Wuchteinrichtung zur Ausführung eines Mehr-Ebenen-Auswuchtens geeignet, wobei die Wuchteinrichtung wenigstens zwei an längs einer Achse der Wuchteinrichtung voneinander beabstandeten Stellen angeordnete Anordnungen von jeweils wenigstens einer Wuchtmasse aufweist. Ein Mehr-Ebenen-Auswuchten, das in der Praxis häufig erforderlich ist, war bislang schwer handhabbar, und zwar aufgrund der unvermeidbaren Rückkopplung zwischen den beiden Auswuchtstellen, d.h. eine an der einen Auswuchtstelle vorgenommene Veränderung des Wuchtvektors hat eine Veränderung der Verhältnisse an der anderen Auswuchtstelle zur Folge, und umgekehrt. Aufgrund der durch die erfindungsgemäße Positionierbarkeit der Wuchtmasse gegebenen Vorhersagbarkeit des Verhaltens des Systems bei einem Verstellen der Wuchtmasse kann man selbst derartige komplexe Auswuchtsituationen in den Griff bekommen und den insgesamt erforderlichen Wuchtvektor schnell und automatisch zielgerichtet einstellen.

In einer weiteren bevorzugten Ausgestaltung der Erfindung ist in die Wuchteinrichtung eine Prozesseinrichtung integriert, die zumindest dazu ausgebildet ist, in Abhängigkeit von eine gemessene Unwucht betreffenden Signalen und/oder Daten zumindest einen Teil des die Wuchteinrichtung mit einbeziehenden Auswuchtprozesses durchzuführen. Hierdurch ist die Wuchteinrichtung im Hinblick auf die hierfür erforderlichen Prozesse selbst dazu in der Lage, zumindest einen Teil des erforderlichen Auswuchtprozesses durchzuführen. Dieser Aspekt des Auswuchtens ist Gegenstand einer anderen Patentanmeldung der Anmelderin, so dass hierauf nicht näher eingegangen wird.

Die Prozesseinrichtung ist insbesondere zusätzlich dazu ausgebildet, Daten und/oder Signale zu erfassen, zu verarbeiten und/oder zu speichern und/oder Prozesse auszuführen, die nicht den Auswuchtprozess betreffen. Hierdurch kann eine ohnehin für den Auswuchtprozess benötigte Infrastruktur für andere Zwecke genutzt werden.

Bei dem erfindungsgemäßen Auswuchtsystem kann vorgesehen sein, dass zur Steuerung eines Auswuchtprozesses der Wuchteinrichtung und/oder zur Kommunikation mit einer in die Wuchteinrichtung integrierten Prozesseinrichtung eine externe Steuereinrichtung vorgesehen ist. Diese externe Steuereinrichtung kann außerdem zur Energieversorgung der Wuchteinrichtung und/oder zur Kommunikation mit einer übergeordneten Maschinensteuerung dienen.

Bevorzugt ist zur Energieversorgung der Wuchteinrichtung und/oder zur Kommunikation zwischen einer externen Steuereinrichtung und einer in die Wuchteinrichtung integrierten Prozesseinrichtung eine berührungslos arbeitende Übertragungseinrichtung vorgesehen. Eine derartige kontaktfreie Übertragung ist an sich bekannt, so dass hierauf nicht näher eingegangen zu werden braucht.

Das Auswuchtsystem kann zur Ausführung eines Mehr-Ebenen-Auswuchtens eine Mehrzahl von Wuchteinrichtungen umfassen, die dazu ausgebildet sind, an längs der Drehachse der Einheit voneinander beabstandeten Stellen angeordnet zu werden. Für das in der Praxis wichtige Mehr-Ebenen-Auswuchten kann also eine Mehrzahl von Wuchteinrichtungen vorgesehen sein, wobei es - wie vorstehend bereits erwähnt - auch möglich ist, hierfür eine einzige Wuchteinrichtung vorzusehen, die mehrere Wuchtmassenanordnungen umfasst, die axial beabstandet sind.

Bei dem erfindungsgemäßen Auswuchtverfahren ist insbesondere vorgesehen, dass das Verfahren einschließlich des Verstellens der Wuchtmasse bei rotierender Einheit durchgeführt wird. Vorzugsweise erfolgt das Auswuchten bei mit Betriebs- oder Nenndrehzahl rotierender Einheit.

Die Erfindung betrifft außerdem eine während des Betriebs rotierende Einheit, insbesondere eine Spindel einer Werkzeugmaschine, mit wenigstens einer Wuchteinrichtung der hier angegebenen Art oder mit einem Auswuchtsystem der hier angegebenen Art.

Ferner betrifft die Erfindung eine Werkzeugmaschine mit wenigstens einer Wuchteinrichtung der hier angegebenen Art oder mit einem Auswuchtsystem der hier angegebenen Art.

Die Erfindung wird im Folgenden beispielhaft unter Bezugnahme auf die Zeichnung beschrieben. Es zeigen:
- Fig. 1: schematisch eine Ausführungsform eines erfindungsgemäßen Auswuchtsystems an einer während des Betriebs rotierenden Einheit,
- Fig. 2: schematisch eine Ausführungsform eines Teils einer Positioniereinrichtung gemäß der Erfindung, und
- Fig. 3a und 3b: schematisch zwei Möglichkeiten zur Durchführung eines Mehr-Ebenen-Auswuchtens.

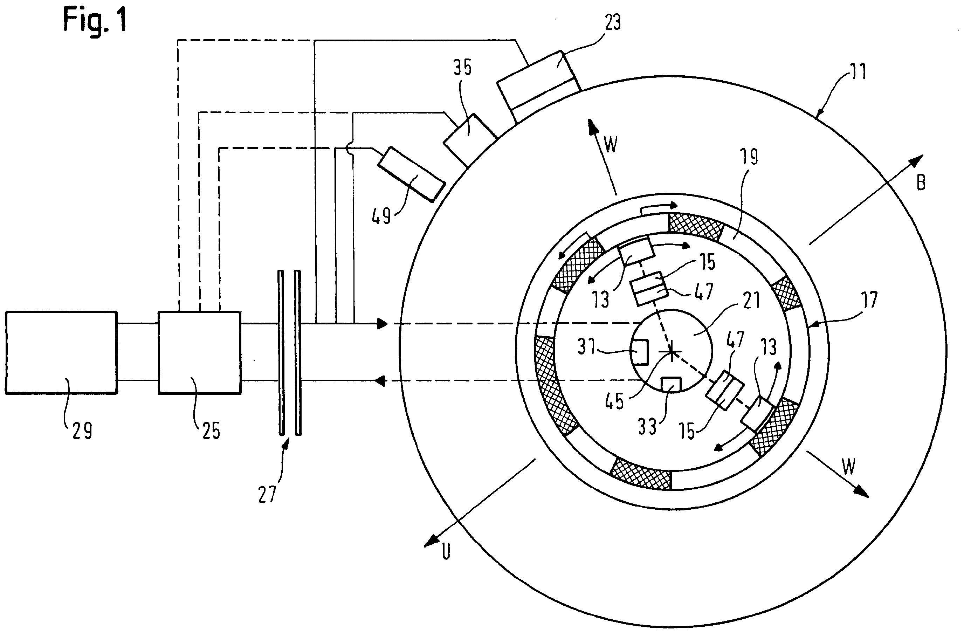

Fig. 1 zeigt schematisch in einer Ebene senkrecht zur Drehachse 45 eine Spindel 11 einer Werkzeugmaschine. Das erfindungsgemäße Auswuchtsystem, auf das nachstehend näher eingegangen wird, ist grundsätzlich in Verbindung mit beliebigen rotierenden Einheiten verwendbar, die es auszuwuchten gilt. Obwohl nachstehend von der Spindel 11 als auszuwuchtende Einheit die Rede ist, ist in der Praxis meist das Gesamtsystem relevant, das zusätzlich zur Spindel das an der Spindel befestigte Werkzeug, beispielsweise eine Schleifscheibe, die Spindellagerung und einen oder mehrere Aufnahmeflansche umfasst. Wenn also im Folgenden von der Spindel 11 als auszuwuchtende Einheit die Rede ist, dann ist darunter die jeweils in der Praxis relevante, auszuwuchtende Gesamtanordnung zu verstehen.

In der Praxis ist die Spindel 11 Bestandteil einer Werkzeugmaschine, die einer übergeordneten Maschinensteuerung 29 zugeordnet ist. Die Maschinensteuerung 29 kommuniziert in dem dargestellten Ausführungsbeispiel mit einer externen Steuereinrichtung 25, die Bestandteil eines erfindungsgemäßen Auswuchtsystems ist. Der Umfang der Aufgaben, die von der externen Steuereinrichtung 25 übernommen werden, kann im Rahmen der Erfindung variieren. So kann beispielsweise vorgesehen sein, dass für die Positionierung der Wuchtmassen, worauf nachstehend näher eingegangen wird, erforderliche Berechnungen von der externen Steuereinrichtung 25 vorgenommen werden. Gleichwohl ist es möglich, dass derartige Berechnungen und weitere Aufgaben von einer in die Wuchteinrichtung integrierten, während des Betriebs rotierenden Prozesseinrichtung 21 durchgeführt werden.

Bei der Steuereinrichtung 25 handelt es sich um eine "externe" Komponente insofern, als die Steuereinrichtung 25 nicht Bestandteil des rotierenden Systems ist, sondern der stationären Seite zugeordnet ist.

Das erfindungsgemäße Auswuchtsystem umfasst des Weiteren eine Wuchteinrichtung, die in dem hier dargestellten Ausführungsbeispiel in die Spindel integriert ist und im Folgenden auch als Wuchtkopf bezeichnet wird. Wie eingangs bereits erwähnt, ist eine derartige Ausgestaltung der Wuchteinrichtung nicht zwingend, sondern die Erfindung umfasst auch auf andere Art und Weise mit der jeweiligen rotierenden Einheit zusammenwirkende Wuchteinrichtungen, beispielsweise anbaubare Wuchteinrichtungen oder Wuchtringe, die die jeweilige rotierende Einheit oder einen Bestandteil davon mittenfrei umschließen. Derartige Wuchtringe müssen nicht in Form eines geschlossenen Ringes vorliegen. Grundsätzlich ist es möglich, derartige Wuchteinrichtungen in Form von Ringsegmenten, die beispielsweise eine etwa C-förmige Struktur aufweisen, vorzusehen.

Die Energieversorgung der hier in die Spindel 11 integrierten Wuchteinrichtung sowie die Kommunikation zwischen der externen Steuereinrichtung 25 und der Wuchteinrichtung, insbesondere der in die Wuchteinrichtung integrierten Prozesseinrichtung 21, erfolgt durch eine berührungslos arbeitende Übertragungseinrichtung 27. Wie durch die beiden, mit entgegengesetzt gerichteten Pfeilsymbolen versehenen Linien angedeutet, ist mittels der Übertragungseinrichtung 27 eine bidirektionale Kommunikation mit der in die Spindel 11 integrierten Wuchteinrichtung möglich. Dies eröffnet mannigfaltige, bislang nicht in Verbindung mit Wuchteinrichtungen realisierbare Anwendungsmöglichkeiten.

Die hier in die Spindel 11 integrierte Wuchteinrichtung umfasst die bereits erwähnte integrierte Prozesseinrichtung 21 sowie zwei jeweils auf einer Kreisbahn um die Drehachse 45 bewegbare Wuchtmassen 13, denen jeweils ein Elektromotor 15 als Antriebseinheit mit einem entsprechenden Getriebe 47 zugeordnet ist. Die Darstellung der Anordnung dieser Komponenten in Fig. 1 ist rein schematisch zu verstehen. Wie beispielsweise eingangs in Verbindung mit den Wuchtmassen 13 bereits erwähnt, können die Wuchtmassen 13 in axialer Richtung beabstandet sein oder die gleiche axiale Lage bei unterschiedlichen radialen Lagen aufweisen.

Der Vollständigkeit halber sei erwähnt, dass prinzipiell auch lediglich eine einzige verstellbare Wuchtmasse vorgesehen sein kann, die insbesondere nicht nur in Umfangsrichtung, sondern auch in radialer Richtung verstellbar ist, um den jeweils benötigten Wuchtvektor sowohl hinsichtlich Richtung als auch Betrag einstellen zu können.

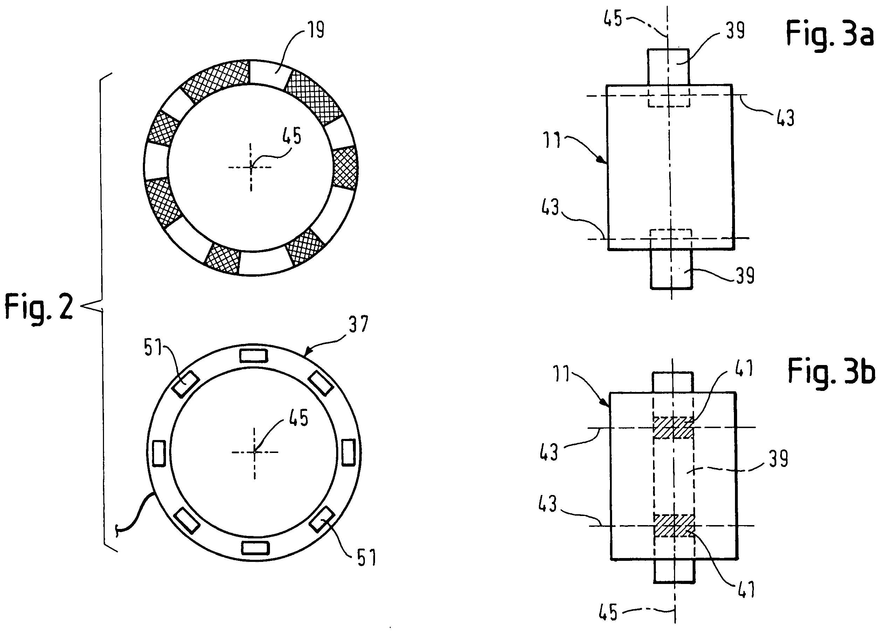

Des Weiteren umfasst die Wuchteinrichtung eine Positioniereinrichtung 17, von der hier ein als geschlossener Ringstreifen ausgebildeter Codeträger 19 dargestellt ist. Auf die Positioniereinrichtung 17 wird nachstehend in Verbindung mit Fig. 2 näher eingegangen.

Der hier dargestellte Codering 19 ist einer der Wuchtmassen 13 zugeordnet und gemeinsam mit dieser Wuchtmasse 13 um die Drehachse 45 verdrehbar. Eine Verstellbewegung der Wuchtmasse 13 mittels des zugeordneten Elektromotors 15 hat folglich eine Bewegung des Coderings 19 zur Folge, und zwar relativ zu einem Codeleser 37 (vgl. Fig. 2), was zu einer Änderung des lesbaren Positionscodes führt.

Der anderen Wuchtmasse 13 ist ebenfalls ein entsprechender, nicht dargestellter Codering zugeordnet, der gemeinsam mit dieser Wuchtmasse 13 bewegbar ist. Die beiden Wuchtmassen 13 und somit die beiden Coderinge 19 sind unabhängig voneinander bewegbar, d.h. die Elektromotoren 15 sind unabhängig voneinander ansteuerbar, so dass die beiden Wuchtmassen 13 unabhängig voneinander in eine jeweils vorgegebene Position verstellt werden können.

Das erfindungsgemäße Auswuchtsystem umfasst des Weiteren eine Messeinrichtung 23, beispielsweise einen Schwingungsaufnehmer, der dazu dient, eine vorhandene Unwucht U zu bestimmen. Die Art und Weise der Ausgestaltung der Messeinrichtung 23 ist grundsätzlich beliebig.

Des Weiteren umfasst das Auswuchtsystem einen Drehsignalgeber, der einen die Drehzahl der rotierenden Spindel repräsentierenden Wert bereitstellt.

Fig. 1 zeigt außerdem eine Messeinrichtung 35, beispielsweise einen Temperatursensor, der kein zwingender Bestandteil des erfindungsgemäßen Auswuchtsystems ist. Dieser Sensor 35 veranschaulicht eine Besonderheit der erfindungsgemäßen Wuchteinrichtung, die darin besteht, dass die integrierte Prozesseinrichtung 21 nicht nur den Auswuchtprozess betreffende Aufgaben übernimmt, sondern zusätzlich dazu in der Lage ist, auswuchtfremde Funktionen zu erfüllen. Hierauf wird nachstehend näher eingegangen.

Der Schwingungsaufnehmer 23, der Drehsignalgeber 49 und der Sensor 35 können, wie durch gestrichelte Linien angedeutet, mit der externen Steuereinrichtung 25 kommunizieren, die für die nötige Datenerfassung, Signalaufbereitung und Signalverarbeitung sorgt, um auf der Basis dieser Informationen zumindest den wesentlichen Teil des Auswuchtprozesses zu steuern. Alternativ kann vorgesehen sein, dass die erwähnten Komponenten direkt mit der in die Wuchteinrichtung integrierten Prozesseinrichtung 21 verbunden sind, so dass eine Übertragung der Informationen an die externe Steuereinrichtung 25 nicht erforderlich ist. Insbesondere für diesen Fall ist die integrierte Prozesseinrichtung 21 mit einer Erfassungs- und Verarbeitungseinrichtung versehen, mit der die eingehenden Signale und/oder Daten erfasst und verarbeitet werden können. Auf diese Weise ist die hier in die Spindel 11 integrierte Wuchteinrichtung aufgrund ihrer integrierten Prozesseinrichtung 21 selbst in der Lage, die als Basis für die Steuerung des Auswuchtprozesses nötigen Informationen zu beschaffen bzw. zu generieren. Insofern handelt es sich bei der Wuchteinrichtung um eine "intelligente" Wuchteinrichtung, die nicht lediglich extern generierte Steuersignale für die Elektromotoren 15 der Wuchtmassen 13 empfängt.

Des Weiteren ist die in die Wuchteinrichtung integrierte Prozesseinrichtung 21 in diesem Ausführungsbeispiel mit einer Speichereinrichtung 33 versehen. Hierdurch kann die Prozesseinrichtung 21 grundsätzlich beliebige Daten speichern, wobei diese Daten den Auswuchtprozess betreffen können, dies aber nicht zwingend erforderlich ist. Die zu speichernden Daten können beispielsweise den Betrieb und/oder den Zustand der Spindel 11 oder des mit der Spindel 11 verbundenen Werkzeugs auch im Hinblick auf auswuchtfremde Aspekte betreffen. Die Prozesseinrichtung 21 und somit die hier in die Spindel 11 integrierte Wuchteinrichtung dienen dadurch als "Fahrtenschreiber" oder "Datenlogger" für grundsätzlich beliebige Informationen.

Es ist auch möglich, in dem Datenspeicher 33 beispielsweise die Betriebssicherheit oder eine bestimmungsgemäße Verwendung des jeweiligen Werkzeugs betreffende Daten abzulegen. So weisen beispielsweise Schleifscheiben eine zulässige Maximaldrehzahl auf, der sich die Schleifscheibe aufgrund ihrer betriebsbedingten Abnutzung im Laufe der Betriebszeit nähert, da die wirksame Umfangsgeschwindigkeit der Schleifscheibe am Werkstück möglichst konstant bleiben soll. Indem dem Gesamtsystem derartige sicherheits- bzw. betriebsrelevante Daten mittels der Speichereinrichtung 33 der Prozesseinrichtung 21 zur Kenntnis gebracht werden, können diese Informationen automatisch während des Betriebs berücksichtigt werden. Diese Überwachung kann dann, sobald die betreffende Bedingung erfüllt ist, eine vorgegebene Reaktion auslösen, beispielsweise ein Warnsignal erzeugen.

Zur Durchführung des Auswuchtprozesses wird in dem hier beschriebenen Ausführungsbeispiel zunächst die vorhandene Unwucht U der Spindel 11 bzw. des die Spindel 11 und insbesondere das jeweilige Werkzeug umfassenden rotierenden Gesamtsystems bestimmt. Entweder mittels der externen Steuereinrichtung 25 oder der in die Wuchteinrichtung integrierten Prozesseinrichtung 21 werden aus der gemessenen Unwucht U Sollsignale für die beiden Wuchtmassen 13 berechnet. Für jede Position der erfindungsgemäßen Wuchteinrichtung ist die Auswuchtwirkung W der an dieser Position befindlichen Wuchtmasse 13 bekannt. Für jede Positionierung der beiden Wuchtmassen 13 ist folglich bekannt, wie sich die beiden Teil-Wuchtvektoren W zu einem resultierenden Wuchtvektor B addieren, so dass ausgehend von der durch die Messung hinsichtlich Richtung und Betrag bekannten Unwucht U diejenigen Sollpositionen für die beiden Massen berechnet werden können, die den gewünschten, die Unwucht U kompensierenden resultierenden Wuchtvektor W zur Folge haben.

Die Positionen, an denen sich die Wuchtmassen 13 sowohl bei einem Einschalten des Systems als auch während des Verstellvorgangs befinden, sind aufgrund der Positioniereinrichtung 17 eindeutig identifizierbar. Aus diesen eindeutig identifizierbaren Ist-Positionen der Wuchtmassen 13 und den zuvor berechneten Sollpositionen können die erforderlichen Verstellwege für die Wuchtmassen 13 berechnet werden.

Fig. 2 zeigt einen ringförmigen Codeträger 19, der in Umfangsrichtung magnetisierte Segmente aufweist. Der hierdurch realisierte Binärcode kann mittels eines Codelesers 37 gelesen werden, der entsprechend dem Codeträger 19 ringförmig ausgebildet ist und eine Mehrzahl von in Umfangsrichtung verteilt angeordneten Hall-Sonden 51 umfasst.

Bei einer Verstellbewegung der betreffenden Wuchtmasse 13 (vgl. Fig. 1) wird der Codeträger 19 relativ zu dem Codeleser 37 verdreht, die im montierten Zustand koaxial zueinander und mit geringem axialen Abstand voneinander angeordnet sind. Die wesentliche Eigenschaft dieser Positioniereinrichtung ist, dass aufgrund der Nutzung dieses Single-Track-Graycode-Prinzips benachbarte, d.h. bei einer Drehung des Codelesers 19 relativ zum Codeleser 37 aufeinander folgende, Codes sich lediglich um ein Bit voneinander unterscheiden. Die Ortsauflösung der Positioniereinrichtung bestimmt sich durch die Anzahl der Magnetisierungsbereiche des Codeträgers 19 sowie der Sensoren 51 des Codelesers 37.

In der Praxis können problemlos Ortsauflösungen mit mehreren Tausend Drehstellungen über einen Winkel von 360° erreicht werden.

Es sei an dieser Stelle erwähnt, dass das Zusammenwirken von magnetisierten Segmenten eines Kreisrings mit einer entsprechenden Anordnung von Hall-Sonden nur ein Beispiel für die Nutzung des Graycode-Prinzips darstellt. Es sind diesbezüglich grundsätzlich beliebige Ausgestaltungen der Positioniereinrichtung möglich. Auch die Nutzung des Gray-Code-Prinzips selbst ist nicht zwingend.

Die Fig. 3a und 3b zeigen zwei mögliche Varianten zur Durchführung eines Mehr-Ebenen-Auswuchtens einer rotierenden Einheit 11, beispielsweise einer relativ breiten Schleifscheibe.

Um an in axialer Richtung beabstandeten Ausgleichsebenen 43 auswuchten zu können, können gemäß Fig. 3a zwei separate Wuchteinrichtungen 39 zum Einsatz kommen, die in axialer Richtung voneinander beabstandet und beispielsweise jeweils an die rotierende Einheit 11 angebaut sind.

Alternativ kann gemäß Fig. 3b eine einzige Wuchteinrichtung 39 vorgesehen sein, die zwei axial beabstandete Wuchtbereiche 41 aufweist, wobei an jedem Wuchtbereich 41 wenigstens eine Wuchtmasse angeordnet ist. Auch auf diese Weise kann mit einer einzigen Wuchteinrichtung 39 an zwei axial beabstandeten Ausgleichsebenen 43 ausgewuchtet werden.

Die Wahl zwischen diesen beiden Varianten gemäß Fig. 3a und 3b erfolgt insbesondere in Abhängigkeit von den axialen Abmessungen der auswuchtenden rotierenden Einheit 11.

### Bezugszeichenliste

- 11: rotierende Einheit
- 13: Wuchtmasse
- 15: Antriebseinheit, Elektromotor
- 17: Positioniereinrichtung
- 19: Codeträger
- 21: Prozesseinrichtung
- 23: Messeinrichtung, Schwingungsaufnehmer
- 25: externe Steuereinrichtung
- 27: Übertragungseinrichtung
- 29: Maschinensteuerung
- 31: Erfassungs- und Verarbeitungseinrichtung
- 33: Speichereinrichtung
- 35: Messeinrichtung, Sensor
- 37: Codeleser
- 39: Wuchteinrichtung
- 41: Wuchtbereich
- 43: Ausgleichsebene
- 45: Bezugsachse/Drehachse
- 47: Getriebe
- 49: Drehsignalgeber
- 51: Hall-Sonden/Sensoren

- U: Unwucht
- W: Auswuchtwirkung
- B: resultierender Wuchtvektor

## Patentansprüche

1. Wuchteinrichtung, insbesondere Wuchtkopf oder Wuchtring, für ein elektromechanisches Auswuchtsystem für rotierende Einheiten (11), insbesondere für Spindeln von Werkzeugmaschinen, mit
zumindest einer Wuchtmasse (13), die zur Kompensation einer Unwucht (U) der Einheit (11) verstellbar ist,
einer Antriebseinheit (15), insbesondere einem Elektromotor, zum Verstellen der Wuchtmasse (13), und
einer Positioniereinrichtung (17), durch die eine Mehrzahl von Drehstellungen vorgegeben ist, in welche die Wuchtmasse (13) verstellbar ist, wobei die Positioniereinrichtung (17) eine im Betrieb mit der Einheit (11) rotierende Einrichtung (19, 37) zum Messen der Drehstellungen umfasst, durch welche jeweils die absolute Drehstellung der Wuchtmasse (13) in einem bezüglich der Wuchteinrichtung festen Koordinatensystem vorgegeben oder bestimmbar ist,
**dadurch gekennzeichnet, dass**
die rotierende Einrichtung (19, 37) zwei relativ zueinander verdrehbare Komponenten (19, 37) umfasst,
wobei einer Verstellbewegung der Wuchtmasse (13) eine Drehbewegung der einen Komponente (19) relativ zu der anderen Komponente (37) zugeordnet ist, und
wobei durch die Relativstellung der beiden Komponenten (19, 37) die absolute Drehstellung der Wuchtmasse (13) vorgegeben oder bestimmbar ist.

2. Wuchteinrichtung nach Anspruch 1,
**dadurch gekennzeichnet,**
**dass** die Wuchteinrichtung in die Einheit (11) integrierbar, an die Einheit (11) anbaubar und/oder um die Einheit (11) herum montierbar ist.

3. Wuchteinrichtung nach Anspruch 1 oder 2,
**dadurch gekennzeichnet,**
**dass** für die Drehstellungen jeweils die Auswuchtwirkung (W) der in der betreffenden Drehstellung befindlichen Wuchtmasse (13) und/oder für jede Änderung der Drehstellung der Wuchtmasse (13) die daraus resultierende Änderung der Auswuchtwirkung (W) der Wuchtmasse (13) bekannt oder bestimmbar ist.

4. Wuchteinrichtung nach einem der vorhergehenden Ansprüche,
**dadurch gekennzeichnet,**
**dass** die Drehstellungen codiert und mittels eines Codelesers (37) lesbar sind, und/oder
**dass** die Drehstellungen nach dem Graycode-Prinzip codiert sind, insbesondere nach dem Single-Track-Graycode-Prinzip.

5. Wuchteinrichtung nach Anspruch 4,
**dadurch gekennzeichnet,**
**dass** einer Verstellbewegung der Wuchtmasse (13) eine Bewegung eines Codeträgers (19) relativ zu einem Codeleser (37) zugeordnet ist, die eine Änderung des lesbaren Drehstellungscodes zur Folge hat, wobei insbesondere der Codeträger (19) wenigstens eine, insbesondere genau eine, ringförmige Codespur umfasst.

6. Wuchteinrichtung nach einem der vorhergehenden Ansprüche,
**dadurch gekennzeichnet,**
**dass** die Wuchteinrichtung eine Mehrzahl von Wuchtmassen (13), insbesondere genau zwei Wuchtmassen (13), umfasst, wobei die Wuchtmassen (13) unabhängig voneinander verstellbar sind.

7. Wuchteinrichtung nach einem der vorhergehenden Ansprüche,
**dadurch gekennzeichnet,**
**dass** zur Ausführung eines Mehr-Ebenen-Auswuchtens die Wuchteinrichtung wenigstens zwei an längs einer Achse der Wuchteinrichtung voneinander beabstandeten Stellen angeordnete Anordnungen von jeweils wenigstens einer Wuchtmasse (13) umfasst.

8. Wuchteinrichtung nach einem der vorhergehenden Ansprüche,
**dadurch gekennzeichnet,**
**dass** eine in die Wuchteinrichtung integrierte Prozesseinrichtung (21) vorgesehen ist, die zumindest dazu ausgebildet ist, in Abhängigkeit von eine gemessene Unwucht (U) betreffenden Signalen und/oder Daten zumindest einen Teil eines die Wuchteinrichtung mit einbeziehenden Auswuchtprozesses durchzuführen, wobei insbesondere die Prozesseinrichtung (21) zusätzlich dazu ausgebildet ist, Daten und/oder Signale zu erfassen, zu verarbeiten und/oder zu speichern und/oder Prozesse auszuführen, die nicht den Auswuchtprozess betreffen.

9. Wuchteinrichtung, insbesondere Wuchtkopf oder Wuchtring, für ein elektromechanisches Auswuchtsystem für rotierende Einheiten (11), insbesondere für Spindeln von Werkzeugmaschinen, mit
zumindest einer Wuchtmasse (13), die zur Kompensation einer Unwucht (U) der Einheit (11) verstellbar ist,
einer Antriebseinheit (15), insbesondere einem Elektromotor, zum Verstellen der Wuchtmasse (13), und
einer Positioniereinrichtung (17), durch die eine Mehrzahl von Drehstellungen vorgegeben ist, in welche die Wuchtmasse (13) verstellbar ist, wobei die Positioniereinrichtung (17) eine im Betrieb mit der Einheit (11) rotierende Einrichtung (19, 37) zum Messen der Drehstellungen umfasst, durch welche jeweils die absolute Drehstellung der Wuchtmasse (13) in einem bezüglich der Wuchteinrichtung festen Koordinatensystem vorgegeben oder bestimmbar ist,
**dadurch gekennzeichnet, dass**
die Einrichtung zum Messen der Drehstellungen einen Permanentmagneten und einen Sensor umfasst, wobei der Permanentmagnet relativ zu dem Sensor drehbar angeordnet ist, und wobei der Sensor in der Lage ist, die Drehstellung des Permanentmagneten zu messen, insbesondere mit einer Auflösung von deutlich unter 1°,
wobei einer Verstellbewegung der Wuchtmasse (13) eine Drehbewegung des Permanentmagneten relativ zum Sensor zugeordnet ist, und wobei durch die Relativstellung des Permanentmagneten gegenüber dem Sensor die absolute Drehstellung der Wuchtmasse (13) vorgegeben oder bestimmbar ist.

10. Elektromechanisches Auswuchtsystem für rotierende Einheiten (11), insbesondere für Spindeln von Werkzeugmaschinen, mit
wenigstens einer in eine Einheit (11) integrierten, an eine Einheit (11) angebauten und/oder um eine Einheit (11) herum montierten Wuchteinrichtung nach einem der vorhergehenden Ansprüche, und
einer Messeinrichtung (23) zum Bestimmen einer Unwucht der Einheit (11), wobei insbesondere zur Steuerung eines Auswuchtprozesses der Wuchteinrichtung und/oder zur Kommunikation mit einer in die Wuchteinrichtung integrierten Prozesseinrichtung (21) eine externe Steuereinrichtung (25) vorgesehen ist.

11. Auswuchtsystem nach Anspruch 10,
**dadurch gekennzeichnet,**
**dass** zur Energieversorgung der Wuchteinrichtung und/oder zur Kommunikation zwischen einer externen Steuereinrichtung (25) und einer in die Wuchteinrichtung integrierten Prozesseinrichtung (21) eine berührungslos arbeitende Übertragungseinrichtung (27) vorgesehen ist, und/oder dass eine externe Steuereinrichtung (25) und/oder eine in die Wuchteinrichtung integrierte Prozesseinrichtung (21) dazu ausgebildet ist, insbesondere automatisch, aus einer gemessenen Unwucht (U) der Einheit (11) eine Solldrehstellung für die Wuchtmasse (13) zu berechnen, in der die Wuchtmasse (13) die Unwucht (U) kompensiert, und die Wuchtmasse (13) in die Solldrehstellung zu verstellen.

12. Auswuchtsystem nach Anspruch 10 oder 11,
**dadurch gekennzeichnet,**
**dass** zur Ausführung eines Mehr-Ebenen-Auswuchtens eine Mehrzahl von Wuchteinrichtungen vorgesehen ist, die dazu ausgebildet sind, an längs der Drehachse der Einheit (11) voneinander beabstandeten Stellen angeordnet zu werden.

13. Während des Betriebs rotierende Einheit (11), insbesondere Spindel einer Werkzeugmaschine, mit wenigstens einer Wuchteinrichtung nach einem der Ansprüche 1 bis 9 oder mit einem Auswuchtsystem nach einem der Ansprüche 10 bis 12, und/oder
Werkzeugmaschine mit wenigstens einer Wuchteinrichtung nach einem der Ansprüche 1 bis 9 oder mit einem Auswuchtsystem nach einem der Ansprüche 10 bis 12.

14. Verfahren zum, insbesondere automatischen, Auswuchten von rotierenden Einheiten (11), insbesondere Spindeln von Werkzeugmaschinen, mittels wenigstens einer in die Einheit (11) integrierten, an die Einheit (11) angebauten und/oder um die Einheit (11) herum montierten Wuchteinrichtung nach einem der Ansprüche 1 bis 9, bei dem
eine Unwucht (U) der Einheit (11) gemessen wird,
aus der gemessenen Unwucht (U) eine Solldrehstellung für die Wuchtmasse (13) berechnet wird, in der die Wuchtmasse (13) die Unwucht (U) kompensiert,
die Wuchtmasse (13) in die Solldrehstellung verstellt wird, und
wobei jeweils die absolute Drehstellung der Wuchtmasse (13) in einem bezüglich der Wuchteinrichtung festen Koordinatensystem vorgegeben ist oder bestimmt wird.

15. Verfahren nach Anspruch 14,
**dadurch gekennzeichnet,**
**dass** das Verfahren einschließlich des Verstellens der Wuchtmasse (13) bei, insbesondere mit Betriebsdrehzahl, rotierender Einheit (11) durchgeführt wird, und/oder
**dass** zur Ausführung eines Mehr-Ebenen-Auswuchtens das Verfahren mittels wenigstens zwei an längs der Drehachse der Einheit (11) voneinander beabstandeten Stellen angeordneten Wuchteinrichtungen oder in eine Wuchteinrichtung integrierten Anordnungen von jeweils wenigstens einer Wuchtmasse (13) durchgeführt wird.

## Claims

1. A balancing device, in particular a balancing head or a balancing ring, for an electromechanical balancing system for rotating units (11), in particular for spindles of machine tools, comprising at least one balancing mass (13) which is adjustable for compensation of an imbalance (U) of the unit (11);
a drive unit (15), in particular an electric motor, for adjusting the balancing mass (13); and
a positioning device (17) by which a plurality of rotational positions are predefined into which the balancing mass (13) can be adjusted, wherein the positioning device (17) comprises a device (19, 37), rotating with the unit (11) during operation, for measuring the rotational positions by which the respective absolute rotational position of the balancing mass (13) in a coordinate system fixed with respect to the balancing device is predefined or can be determined,
**characterized in that**
the rotating device (19, 37) comprises two components (19, 37) rotatable relative to one another,
with a rotational movement of the one component (19) relative to the other component (37) being associated with an adjustment movement of the balancing mass (13), and
with the absolute rotational position of the balancing mass (13) being predefined or able to be determined by the relative position of the two components (19, 37).

2. A balancing device in accordance with claim 1,
**characterized in that**
the balancing device can be integrated into the unit (11), can be attached to the unit (11) and/or can be mounted about the unit (11).

3. A balancing device in accordance with claim 1 or claim 2,
**characterized in that**
the respective balancing effect (W) of the balancing mass (13) located in the respective rotational position is known or can be determined for the rotational positions and/or the change of the balancing effect (W) of the balancing mass (13) resulting from each change of the rotational position of the balancing mass (13) is known or can be determined for each such change.

4. A balancing device in accordance with any one of the preceding claims,
**characterized in that**
the rotational positions are encoded and can be read by means of a code reader (37); and/or
**in that** the rotational positions are encoded according to the Gray code principle, in particular according to the single-track Gray code principle.

5. A balancing device in accordance with claim 4,
**characterized in that**
a movement of a code carrier (19) relative to a code reader (37) which has the consequence of a change of the legible rotational position code is associated with an adjustment movement of the balancing mass (13), with the code carrier (19) in particular comprising at least one, in particular exactly one, annular code track.

6. A balancing device in accordance with any one of the preceding claims,
**characterized in that**
the balancing device comprises a plurality of balancing masses (13), in particular exactly two balancing masses (13), with the balancing masses (13) being adjustable independently of one another.

7. A balancing device in accordance with any one of the preceding claims,
**characterized in that**,
for carrying out a multi-planar balancing, the balancing device comprises at least two arrangements of respectively at least one balancing mass (13) arranged at points spaced apart from one another along an axis of the balancing device.

8. A balancing device in accordance with any one of the preceding claims,
**characterized in that**
a process device (21) is provided which is integrated into the balancing device and which is at least configured to carry out at least a part of a balancing process including the balancing device in dependence on signals and/or data relating to a measured imbalance (U), with in particular the process device (21) additionally being configured to detect, to process and/or to store data and/or signals and/or to carry out processes which do not relate to the balancing process.

9. A balancing device, in particular a balancing head or a balancing ring, for an electromechanical balancing system for rotating units (11), in particular for spindles of machine tools, comprising at least one balancing mass (13) which is adjustable for compensation of an imbalance (U) of the unit (11);
a drive unit (15), in particular an electric motor, for adjusting the balancing mass (13); and
a positioning device (17) by which a plurality of rotational positions are predefined into which the balancing mass (13) can be adjusted, wherein the positioning device (17) comprises a device (19, 37), rotating with the unit (11) during operation, for measuring the rotational positions by which the respective absolute rotational position of the balancing mass (13) in a coordinate system fixed with respect to the balancing device is predefined or can be determined, **characterized in that**
a device for measuring the rotational positions comprises a permanent magnet and a sensor, with the permanent magnet being arranged rotatable relative to the sensor, and with the sensor being able to measure the rotational position of the permanent magnet, in particular with a resolution of considerably less than 1°,
with a rotational movement of the permanent magnet relative to the sensor being associated with an adjustment movement of the balancing mass (13), and with the absolute rotational position of the balancing mass (13) being predefined or able to be determined by the relative position of the permanent magnet with respect to the sensor.

10. An electromechanical balancing system for rotating units (11), in particular for spindles of machine tools, comprising at least one balancing device in accordance with any one of the preceding claims integrated into a unit (11), attached to a unit (11) and/or mounted about a unit (11); and
a measuring device (23) for determining an imbalance of the unit (11),
with an external control device (25) in particular being provided for controlling a balancing process of the balancing device and/or for communicating with a process device (21) integrated into the balancing device.

11. A balancing system in accordance with claim 10,
**characterized in that**
a contactlessly working transfer device (27) is provided for the energy supply of the balancing device and/or for the communication between an external control device (25) and a process device (21) integrated into the balancing device; and/or
**in that** an external control device (25) and/or a process device (21) integrated into the balancing device is/are configured to calculate, in particular automatically, a desired rotational position for the balancing mass (13), in which the balancing mass (13) compensates the imbalance (U), from a measured imbalance (U) of the unit (11) and to adjust the balancing mass (13) into the desired rotational position.

12. A balancing system in accordance with claim 10 or claim 11,
**characterized in that**
a plurality of balancing devices are provided for carrying out a multi-planar balancing and are configured to be arranged at points spaced apart from one another along the axis of rotation of the unit (11).

13. A unit (11) rotating during operation, in particular a spindle of a machine tool, comprising at least one balancing device in accordance with any one of the claims 1 to 9 or a balancing system in accordance with any one of the claims 10 to 12; and/or
a machine tool comprising at least one balancing device in accordance with any one of the claims 1 to 9 or a balancing system in accordance with any one of the claims 10 to 12.

14. A method for the balancing, in particular for the automatic balancing, of rotating units (11), in particular spindles of machine tools, by means of at least one balancing device in accordance with any one of the claims 1 to 9 integrated into the unit (11), attached to the unit (11) and/or mounted about the unit (11), in which an imbalance (U) of the unit (11) is measured;
a desired rotational position for the balancing mass (13) in which the balancing mass (13) compensates the imbalance (U) is calculated from the measured imbalance (U);
the balancing mass (13) is adjusted into the desired rotational position; and
wherein the respective absolute rotational position of the balancing mass (13) in a coordinate system fixed with respect to the balancing device is predefined or determined.

15. A method in accordance with claim 14,
**characterized in that**
the method, including the adjustment of the balancing mass (13), is carried out with a rotating unit (11), in particular a unit rotating at the operating speed; and/or
**in that**, for carrying out a multi-planar balancing, the method is carried out by means of at least two balancing devices arranged at points spaced apart from one another along the axis of rotation of the unit (11) or by means of arrangements of respectively at least one balancing mass (13) integrated into a balancing device.

## Revendications

1. Dispositif d'équilibrage, en particulier tête d'équilibrage ou anneau d'équilibrage, pour un système d'équilibrage électromécanique pour des unités tournantes (11), en particulier pour des broches de machines-outils, comportant
au moins une masselotte d'équilibrage (13) qui est réglable pour la compensation d'un balourd (U) de l'unité (11),
une unité d'entraînement (15), en particulier un moteur électrique, pour régler la masselotte d'équilibrage (13), et
un moyen de positionnement (17) définissant une pluralité de positions de rotation jusque dans lesquelles la masselotte d'équilibrage (13) est réglable, le moyen de positionnement (17) comprenant un moyen tournant (19, 37) de mesure des positions de rotation, qui tourne avec l'unité (11) pendant le fonctionnement et qui définit ou permet de déterminer la position de rotation absolue de la masselotte d'équilibrage (13) dans un système de coordonnées fixe par rapport au dispositif d'équilibrage,
**caractérisé en ce que**
le moyen tournant (19, 37) comprend deux composants (19, 37) mobiles en rotation l'un par rapport à l'autre,
un mouvement de rotation de l'un des composants (19) par rapport à l'autre composant (37) est associé à un mouvement de réglage de la masselotte d'équilibrage (13), et
la position de rotation absolue de la masselotte d'équilibrage (13) définit ou permet de déterminer la position relative des deux composants (19, 37).

2. Dispositif d'équilibrage selon la revendication 1,
**caractérisé en ce que**
le dispositif d'équilibrage est intégrable dans l'unité (11), est susceptible d'être rapporté sur l'unité (11) et/ou d'être monté autour de l'unité (11).

3. Dispositif d'équilibrage selon la revendication 1 ou 2,
**caractérisé en ce que**
pour les positions de rotation, l'effet d'équilibrage (W) respectif de la masselotte d'équilibrage (13) située dans la position de rotation correspondante, et/ou pour chaque modification de la position de rotation de la masselotte d'équilibrage (13), la modification de l'effet d'équilibrage (W) de la masselotte d'équilibrage (13) qui en résulte est connu(e) ou peut être déterminé(e).

4. Dispositif d'équilibrage selon l'une des revendications précédentes,
**caractérisé en ce que**
les positions de rotation sont codées et sont lisibles à l'aide d'un lecteur de code (37), et/ou
les positions de rotation sont codées selon le principe du code de Gray, en particulier selon le principe du code de Gray dit Single-Track.

5. Dispositif d'équilibrage selon la revendication 4,
**caractérisé en ce que**
un mouvement d'un support de code (19) par rapport à un lecteur de code (37) est associé à un mouvement de réglage de la masselotte d'équilibrage (13), qui a pour conséquence une modification du code lisible de la position de rotation, et en particulier le support de code (19) présente au moins une, de préférence précisément une piste de code annulaire.

6. Dispositif d'équilibrage selon l'une des revendications précédentes,
**caractérisé en ce que**
le dispositif d'équilibrage comprend une pluralité de masselottes d'équilibrage (13), en particulier précisément deux masselottes d'équilibrage (13), les masselottes d'équilibrage (13) étant réglables indépendamment l'une de l'autre.

7. Dispositif d'équilibrage selon l'une des revendications précédentes,
**caractérisé en ce que**
pour réaliser un équilibrage sur plusieurs plans, le dispositif d'équilibrage comprend au moins deux ensembles d'au moins une masselotte d'équilibrage respective (13) agencés à des emplacements espacés l'un de l'autre le long d'un axe du dispositif d'équilibrage.

8. Dispositif d'équilibrage selon l'une des revendications précédentes,
**caractérisé en ce que**
il est prévu un moyen de processus (21) intégré dans le dispositif d'équilibrage et réalisé au moins pour exécuter une partie au moins d'un processus d'équilibrage ayant recours au dispositif d'équilibrage, en fonction de signaux et/ou de données concernant un balourd mesuré (U), et en particulier le moyen de processus (21) est en supplément réalisé pour acquérir des données et/ou des signaux, pour les traiter et/ou pour les mémoriser et/ou pour exécuter des processus qui ne concernent pas le processus d'équilibrage.

9. Dispositif d'équilibrage, en particulier tête d'équilibrage ou anneau d'équilibrage, pour un système d'équilibrage électromécanique pour des unités tournantes (11), en particulier pour des broches de machines-outils, comportant
au moins une masselotte d'équilibrage (13) qui est réglable pour la compensation d'un balourd (U) de l'unité (11),
une unité d'entraînement (15), en particulier un moteur électrique, pour régler la masselotte d'équilibrage (13), et
un moyen de positionnement (17) définissant une pluralité de positions de rotation jusque dans lesquelles la masselotte d'équilibrage (13) est réglable, le moyen de positionnement (17) comprenant un moyen (19, 37) de mesure des positions de rotation, qui tourne avec l'unité (11) pendant le fonctionnement et qui définit ou permet de déterminer la position de rotation absolue de la masselotte d'équilibrage (13) dans un système de coordonnées fixe par rapport au dispositif d'équilibrage,
**caractérisé en ce que**
le moyen de mesure des positions de rotation comprend un aimant permanant et un capteur, l'aimant permanent étant agencé de façon mobile en rotation par rapport au capteur et le capteur étant apte à mesurer la position de rotation de l'aiment permanant, en particulier avec une résolution nettement inférieure à 1°,
un mouvement de rotation de l'aimant permanent par rapport au capteur est associé à un mouvement de réglage de la masselotte d'équilibrage (13), et la position de rotation absolue de la masselotte d'équilibrage (13) est définie ou peut être déterminée par la position relative de l'aimant permanent par rapport au capteur.

10. Système d'équilibrage électromécanique pour des unités tournantes (11), en particulier pour des broches de machines-outils, comportant un dispositif d'équilibrage, intégrable dans une unité (11), rapporté sur une unité (11) et/ou monté autour d'une unité (11), selon l'une des revendications précédentes, et
un moyen de mesure (23) pour déterminer un balourd de l'unité (11), et pour commander un processus d'équilibrage du dispositif d'équilibrage et/ou pour communiquer avec un moyen de processus (21) intégré dans le dispositif d'équilibrage, il est prévu un moyen de commande externe (25).

11. Système d'équilibrage selon la revendication 10,
**caractérisé en ce que**
pour alimenter en énergie le dispositif d'équilibrage et/ou pour communiquer entre un moyen de commande externe (25) et un moyen de processus (21) intégré dans le dispositif d'équilibrage, il est prévu un moyen de transmission (27) fonctionnant sans contact physique, et/ou en ce qu'un moyen de commande externe (25) et/ou un moyen de processus (21) intégré dans le dispositif d'équilibrage est réalisé pour calculer automatiquement une position de rotation de consigne pour la masselotte d'équilibrage (13) à partir d'un balourd mesuré (U) de l'unité (11), position dans laquelle la masselotte d'équilibrage (13) compense le balourd (U), et pour régler la masselotte d'équilibrage (13) jusque dans la position de rotation de consigne.

12. Système d'équilibrage selon la revendication 10 ou 11,
**caractérisé en ce que**
pour réaliser un équilibrage sur plusieurs plans, il est prévu une pluralité de dispositifs d'équilibrage qui sont réalisés pour être agencés à des emplacements espacés les uns des autres le long de l'axe de rotation de l'unité (11).

13. Unité (1) tournant pendant le fonctionnement, en particulier broche d'une machine-outil, comportant au moins un dispositif d'équilibrage selon l'une des revendications 1 à 9 ou comportant un système d'équilibrage selon l'une des revendications 10 à 12, et/ou
machine-outil comportant au moins un dispositif d'équilibrage selon l'une des revendications 1 à 9 ou comportant un système d'équilibrage selon l'une des revendications 10 à 12.

14. Procédé d'équilibrage en particulier automatique d'unités tournantes (11), en particulier de broches de machines-outils, à l'aide d'au moins un dispositif d'équilibrage intégrable dans l'unité (11), rapporté sur l'unité (11) et/ou monté autour de l'unité (11), selon l'une des revendications 1 à 9, dans lequel
un balourd (U) de l'unité (11) est mesuré,
à partir du balourd mesuré (U), une position de rotation de consigne pour la masselotte d'équilibrage (13) est calculée, dans laquelle la masselotte d'équilibrage (13) compense le balourd (U),
la masselotte d'équilibrage (13) est réglée jusque dans la position de rotation de consigne, et
la position de rotation absolue respective de la masselotte d'équilibrage (13) est définie ou peut être déterminée dans un système de coordonnées fixe par rapport au dispositif d'équilibrage.

15. Procédé selon la revendication 14,
**caractérisé en ce que**
le procédé, y compris le réglage de la masselotte d'équilibrage (13), est mis en oeuvre lorsque l'unité (11) tourne en particulier à une vitesse de rotation de fonctionnement, et/ou
pour réaliser un équilibrage sur plusieurs plans, le procédé est mis en oeuvre à l'aide d'au moins deux dispositifs d'équilibrage agencés à des emplacements espacés l'un de l'autre le long de l'axe de rotation de l'unité (11) ou à l'aide d'ensembles d'au moins une masselotte d'équilibrage respective (13) intégrés dans un dispositif d'équilibrage.
